# EUROPEAN PATENT SPECIFICATION

(11) **EP 0 656 594 B1**
(45) Date of publication and mention of the grant of the patent: **14.07.1999**
(21) Application number: 94118957.3
(22) Date of filing: 01.12.1994
(51) Int. Cl.: G06F 17/21

(54) **Word processor**
Textverarbeitungsgerät
Appareil de traitement de texte

(30) Priority: 02.12.1993 JP 33929193; 02.02.1994 JP 3185494
(43) Date of publication of application: 07.06.1995
(73) Proprietor: BROTHER KOGYO KABUSHIKI KAISHA, Nagoya-shi, Aichi-ken (JP)
(72) Inventor: Kawakami, Yasushi, c/o Brother Kogyo K.K., Nagoya-shi, Aichi-ken (JP); Yamada, Shiro, c/o Brother Kogyo K.K., Nagoya-shi, Aichi-ken (JP); Ito, Chitoshi, c/o Brother Kogyo K.K., Nagoya-shi, Aichi-ken (JP); Nishio, Mayumi, c/o Brother Kogyo K.K., Nagoya-shi, Aichi-ken (JP); Ueno, Hideo, c/o Brother Kogyo K.K., Nagoya-shi, Aichi-ken (JP); Nakagawa, Sachiko, c/o Brother Kogyo K.K., Nagoya-shi, Aichi-ken (JP); Bito, Mikako, c/o Brother Kogyo K.K., Nagoya-shi, Aichi-ken (JP)
(74) Representative: Prüfer, Lutz H., Dipl.-Phys.

(56) References cited:
- EP-A- 0 424 052
- US-A- 4 686 525
- US-A- 4 706 078
- US-A- 5 257 015

## Description

### BACKGROUND OF THE INVENTION

### 1. Field of the Invention

The present invention relates to a word processor capable of printing characters, such as alphanumeric characters and symbols, with one or more character modifications or enhancements, such as underline, shadow, bold, italic, and the like, and more particularly to the word processor having a display and a display function for displaying characters with character enhancement so as to appear the same on the display as when printed out.

### 2. Description of the Related Art

There has been known a conventional word processor for producing text with alphanumeric characters, symbols, and the like (referred to as characters hereinafter) in the Japanese language, the English language, and the like. The word processor includes basically a display capable of displaying several rows of text data, a keyboard, and a print mechanism having a dot print type print head. Text data of inputted characters is displayed on the display in the form of dot matrixes at a predetermined character size. When the inputted text data is to be printed, the text data is printed on a print sheet based on preset format information that includes the size of print characters, the inter-character pitch, and the row spacing.

Such word processors have a layout display function for showing the layout of inputted text data. Recently, some word processors have a print image display function added to the layout display function so that images of characters are displayed on the display in the same form as the characters will appear in when printed out.

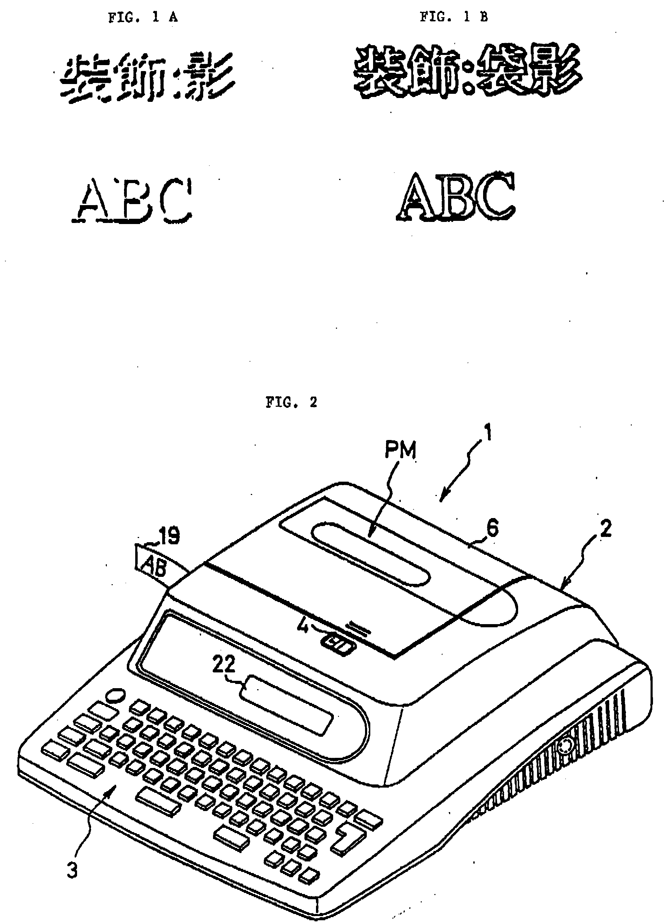

Using this print image display function, a print image of a character will be displayed on the display based on a preset inter-character pitch and row spacing, and at a character display size that corresponds to the preset character print size. Also, when optional character enhancement commands are provided in text data, the characters to be enhanced are displayed on the display as their printed image would appear, that is, as enhanced characters according to the type of character enhancement included in the text data. Examples of character enhancement include outline, bold print, shadow (refer to Fig. 1A), shadow-added (refer to Fig. 1B), italics, and underline. Sometime characters can not be effectively displayed in enhanced form. For example, when characters are to be printed at a small size, and therefore will be displayed at a small size, then enhanced form of character becomes illegible. Another example of ineffective display would be when some enhancement features, such as outline or shadow-added, become indiscernible on the display when characters are displayed at a small size.

From US 5,257,015 a computer with a display is known. On the display characters can be displayed with particular enhancement features. A problem is discussed which arises when using different displays having different properties. The problem is solved by changing the attribute code corresponding to the type of character enhancement.

### SUMMARY OF THE INVENTION

Therefore, it is the object of the present invention to overcome the above-described drawbacks and to provide a word processor with an improved image display function wherein only enhanced characters that can be effectively displayed will be displayed on the screen as print images.

This object is solved by a word processor as set forth in claim 1.

Preferred developments of the invention are given in the subclaims.

### BRIEF DESCRIPTION OF THE DRAWINGS

The above and other objects, features and advantages of the invention will become more apparent from reading the following description of the preferred embodiment taken in connection with the accompanying drawings in which:
Fig. 1A is an exemplary view showing shadow characters;
Fig. 1B is an exemplary view showing shadow-added characters;
Fig. 2 is a perspective view of a tape printer according to preferred embodiments of the present invention;
Fig. 3A is a schematic plan view of a print mechanism employed in the tape printer, with a tape cassette loaded therein;
Fig. 3B is a schematic sectional view taken along a line IIIB-IIIB of Fig. 3A;
Fig. 4 is a block diagram of the control system in the tape printer;
Fig. 5 is a table showing data included in a character size conversion table stored in a ROM of the control system shown in Fig. 4;
Fig. 6 is a flowchart showing basic steps in a tape print routine of the preferred embodiments;
Fig. 7 is a flowchart showing basic steps in a print image display process control routine of the preferred embodiments;
Fig. 8 is a flowchart showing basic steps in a format information change routine of the preferred embodiments;
Fig. 9 is a flowchart showing basic steps in a display image generation control routine according to a first preferred embodiment;
Fig. 10 is a schematic view showing a text memory of the tape printer with various text data and format information data stored therein;
Fig. 11 is a schematic view showing display of characters according the first preferred embodiment when data is stored in the text memory as shown in Fig. 10;
Fig. 12 is a schematic view showing the text memory with other text data and format information data stored therein;
Fig. 13 is a schematic view showing display of characters according the first preferred embodiment when data is stored in the text memory as shown in Fig. 12;
Fig. 14 is a flowchart showing basic steps in a display image generation control routine according to a second preferred embodiment;
Fig. 15 is a schematic view showing display of characters according to an example of the second preferred embodiment when data is stored in the text memory as shown in Fig. 10;
Fig. 16 is a schematic view showing display of characters according to another example of the second preferred embodiment when data is stored in the text memory as shown in Fig. 10;
Fig. 17 is a schematic view showing display of characters according to a further example of the second preferred embodiment when data is stored in the text memory as shown in Fig. 10; and
Fig. 18 is a schematic view showing display of characters according to still another example of the second preferred embodiment when data is stored in the text memory as shown in Fig. 10.

### DETAILED DESCRIPTION OF THE PREFERRED EMBODIMENTS

A word processor according to preferred embodiments of the present invention will be described while referring to the accompanying drawings wherein like parts and components are designated by the same reference numerals to avoid duplicating description. In the preferred embodiments, the present invention is applied to a tape printer capable of printing various alphanumeric letters, symbols, and bar codes (referred to generically as characters hereinafter) onto a print tape.

As shown in Fig. 2, in a word processor according to a first preferred embodiment of the present invention, a keyboard 3 is disposed in front of a body frame 2 of a tape printing apparatus 1, a printing mechanism PM is provided at the rear of the keyboard 3 and within the body frame 2, and a liquid crystal display 22 capable of displaying inputted characters as print-like images is disposed just behind the keyboard 3. The display unit 22 has a screen composed on 32 dots in the vertical direction high and 121 dots in the horizontal. A release button 4 is provided for opening a cover frame 6 when a tape containing cassette CS is to be loaded in the or removed from a printing mechanism PM

On the keyboard 3 there are arranged a variety of keys as character keys for inputting characters of a desired text to be printed; a space key; a return key; cursor moving keys for moving a rectangular cursor K horizontally and vertically on the display 22; format setting keys for changing and setting format information on character enhancement, the character size at which characters are to be printed, and the like; an enter key for entering each of various setting processes; a print key for commanding printing operations; and a power key for turning power on and off.

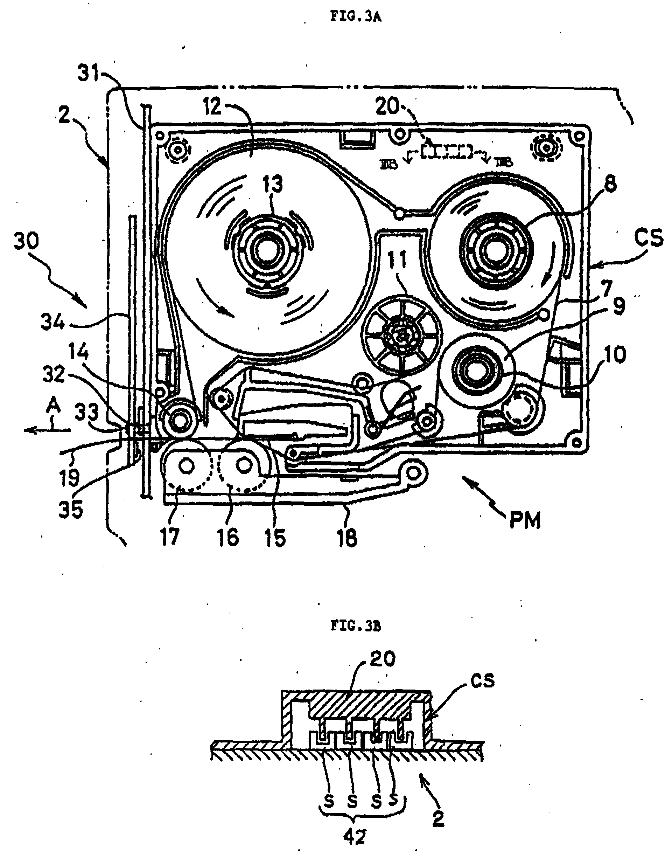

The printing mechanism PM will be described in detail while referring to Fig. 3A. The rectangular, tape containing cassette CS is removably loaded in the printing mechanism PM. Within the tape containing cassette CS, there are rotatably provided a tape spool 8 around which a transparent laminate film 7 is wound; a ribbon supply spool 10 around which a print ribbon 9 is wound; a take-up spool 11 for taking up the print ribbon 9; a supply spool 13 around which a double coated tape 12 with the same width as the laminate film 7 is wound with its peel-off paper on the outside; and a joining roller 14 for adhering the double-coated tape 12 to the laminate film 7. The double-coated tape 12 includes a base tape, on both sides of which are formed adhesive layers, and a peel-off paper attached to the adhesive layer on one side of the base tape.

A thermal head 15 is installed upright in the position where the laminate film 7 and the print ribbon 9 overlap each other. A platen roller 16, for pressing the laminate film 7 and the print ribbon 9 against the thermal head 15, and a feed roller 17, for pressing the laminate film 7 and the double coated tape 12 against the joining roller 14 to thereby form the print tape 19, are pivotally supported for rotation on a support member 18 which is pivotally rotatably mounted on the body frame 2. On the thermal head 15, there is provided a group of heating elements formed of a train of 128 heating elements arranged in the vertical direction.

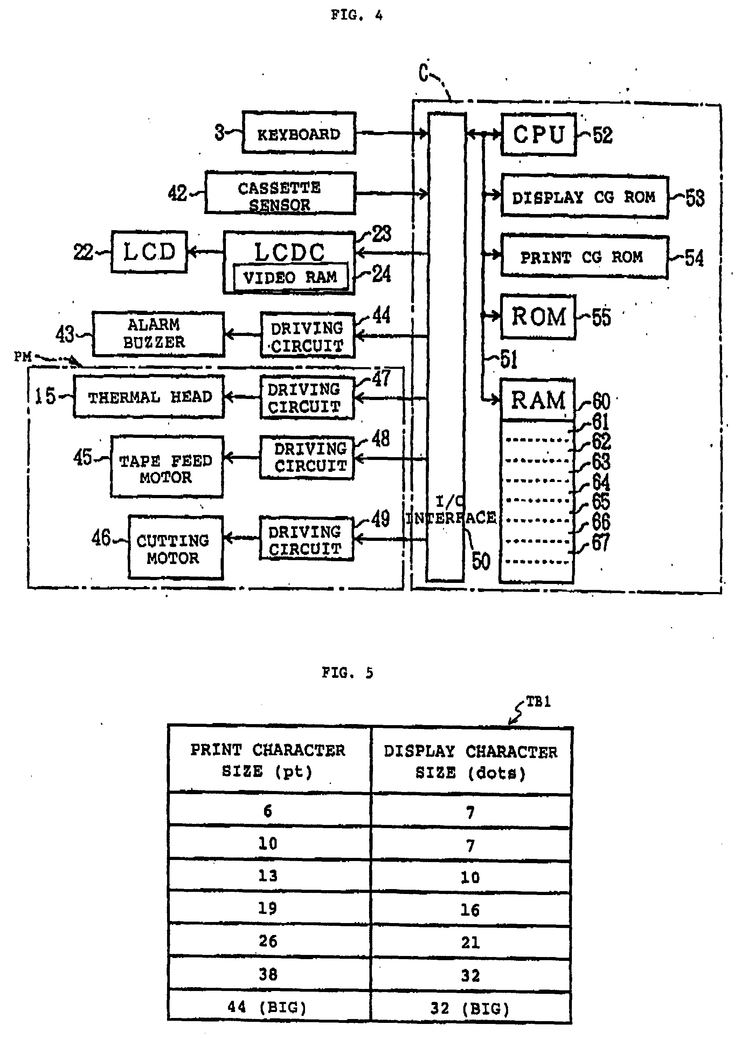

Accordingly, when electric current is passed through the heating elements while the joining roller 14 and the take-up spool 11 are driven in their predetermined rotation directions in synchronism with each other by rotation of a tape feed motor 45 (refer to Fig. 4) in its predetermined rotating direction, characters are printed on the laminate film 7 using plural trains of dots. Then, the double coated tape 12 is attached to the laminate film 7 and the tape is fed, as the print tape 19, in the tape feeding direction A to be discharged from the body frame 2 as shown in Figs. 2 and 3. Details of the printing mechanism PM are described in United States Patent No. 5,188,469, the disclosure of which is hereby incorporated by reference.

Referring to Fig. 3A, a manual cutting mechanism 30 for cutting the print tape 19 will be described in detail below. Just inside the body frame 2, there is provided a plate-formed auxiliary frame 31 in an upright posture and a stationary blade 32 that is fixedly attached to the auxiliary frame 31 so as to face in an upward direction. An operating lever 34 extended in the direction from front to rear is rotatably supported at its portion closer to the front end of the tape printer on a pivot shaft 33 that is fixedly attached to the auxiliary frame 31. A movable blade 35 is fixedly attached to the operating lever 34 in front of the pivot shaft 33 such that it opposes the stationary blade 32. The rear end portion of the operating lever 34 is structured so as to be vertically swingable via a swing drive mechanism (not shown) that is coupled to a cutting motor 46 (see Fig. 4). Normally, the movable blade 35 is held apart from the stationary blade 32.

The print tape 19 having text printed thereon passes through the space between the stationary blade 32 and the movable blade 35 and sticks out of the body frame 2. Then, a cut signal drives the cutting motor 46 to cause the swing drive mechanism to vertically swing the rear end of the operation level 34. The swinging motion causes the moving blade 35 to approach the fixed blade 32 so as to cut the print tape 19.

The print tape 19 to be fed from the tape containing cassette CS (i.e., the double-coated tape 12 and the laminate film 7 mounted in the cassette CS) is provided in five different widths: 6 mm, 9 mm, 12 mm, 18 mm, and 24 mm. On the bottom wall of each tape containing cassette CS, there is provided a projecting piece 20. The projecting piece 20 formed on each tape cassette CS is for indicating a tape width of a tape 19 i.e., the width of the double-coated tape 12 and the laminate film 7 that is mounted in the cassette CS. Because the tape width is one of the five tape widths, the projecting piece 20 formed on each tape cassette CS is formed with four projecting claws for distinguishing in combination one from the five tape widths.

As shown in Fig. 3B, a cassette sensor 42 is provided on the body frame 2 at a position with which the projecting piece 20 of the tape cassette CS will be brought into confrontation when the tape cassette CS is loaded in the printing mechanism portion PM. The cassette sensor 42 is for detecting the condition of the projecting claws of the projecting piece 20 to thereby detect the tape width of a tape 19 housed in the tape cassette CS that is loaded in the printing mechanism portion PM.

The cassette sensor 42 is made from four photocouplers S, each having a light-emitting diode paired with a photodetector. Each of the four photocouplers is located at a position capable of receiving a corresponding projecting claw of the projecting piece 20. Each photosensor is therefore for detecting whether or not the corresponding projecting claw is inserted between the light-emitting diode and the photodetector. Illustratively, the cassette sensor 42 outputs a cassette signal "0100" for a tape width of 24 mm, a cassette signal "1100" for a tape width of 12 mm, or a cassette signal "0000" when not tape cassette CS is mounted.

The control system of the tape printing apparatus 1 is constituted as shown in the block diagram of Fig. 4.

A control unit C includes a CPU 52 and a I/O interface 50, a display CG (character generator) ROM 53, a print CG (character generator) ROM 54, a ROM 55 and a RAM 60 which are connected to the CPU 52 via a bus 51 such as a data bus.

The I/O interface 50 of the control unit C is connected to the keyboard 3; the cassette sensor 42; an LCD controller 23, with a video RAM 24, for outputting display data to the LCD unit 22; a driving circuit 44 for activating an alarm buzzer 43; a driving circuit 47 for driving the thermal head 15; a driving circuit 48 for driving the tape feed motor 45; and a driving circuit 49 for driving the cutting motor 46.

The display CGROM 53 stores display dot pattern data with respect to code data of each of a plurality of characters at each of six display character sizes (that is, 7, 10, 16, 21, 32, and 32 big dot) for each of a plurality of fonts (such as Gothic, Ming type, etc). The display character size defined as the 32 big dot is a display character size that allows display of certain characters, that do not extend below the character base line, at a size larger than the standard 32-dot character size. Capital alphabetic letters are an example of characters to which 32 big dot display character size can be applied.

The print CGROM 54 stores print dot pattern data with respect to code data of each of a plurality of characters at each of seven print character sizes (i.e., 6-point 16-dot, 10-point 24-dot, 13-point 32-dot, 19-point 48-dot, 26-point 64-dot, 38-point 96-dot sizes, and 44-point 96-big-dot) for each of the plurality of fonts. The display character size defined as 44-point, 96-big-dot size is a display character size that allows display of certain characters, that do not extend below the character base line, at a size larger than the standard 96-dot character size. Capital alphabetic letters are an example of characters to which 44-point, 96-big-dot print character size can be applied.

The ROM 55 contains a display drive control program; a character enhancement control program; a print drive control program; and a tape print control program. The display drive control program controls the LCD controller 23 in response to the code data for the characters that are inputted from the keyboard 3. The character enhancement control program is for providing characters with a variety of character modifications or enhancements. The print drive control program drives the thermal head 15 and tape feed motor 45 by consecutively retrieving data from a print data buffer 66. The tape print control program is specific to this invention and will be described later in more detail.

A character size conversion table TB1 depicted in Fig. 5 is stored in the ROM 55. The character size conversion table TB1 lists print character sizes SZ in correspondence with display character sizes at which characters should be displayed when characters are to be printed at a corresponding print character size.

The ROM 55 also contains a print character search table and a print character index table (both not shown). The print character search table lists seven print character sizes in correspondence with start addresses (index addresses) in the print CGROM 54 where print dot pattern data is stored for a series of characters for each of the seven print character sizes. The print character index table lists the above index addresses in correspondence with those start addresses in the print CG ROM 54 where various characters are stored.

Furthermore, the ROM 55 includes a display character search table and a display character index table (both not shown). The display character search table lists six display character sizes in correspondence with those start addresses (index addresses) in the display CGROM 53 where display dot pattern data are stored about a series of characters for each of the six display character sizes. The display character index table lists the above index addresses in correspondence with those start addresses in the display CG ROM 53 where various characters are stored.

A text memory 61 in the RAM 60 accommodates text data input from the keyboard 3. A parameter buffer 62 stores a start address pointer value SP for designating a start address in the text memory 61, an end address pointer value EP for designating an end address in the text memory 61, a data count value DC, character enhancement data MD, and print character size data SZ. A display character size memory 63 contains data about the selected display character size. A location data memory 64 stores data about the display locations in a display data buffer 65 regarding various characters to be displayed. The display data buffer 65 accommodates composed display dot pattern data about a plurality of inputted characters. The print data buffer 66 contains composed print dot pattern data about a plurality of characters to be printed. The RAM 60 is also provided with a work memory 67.

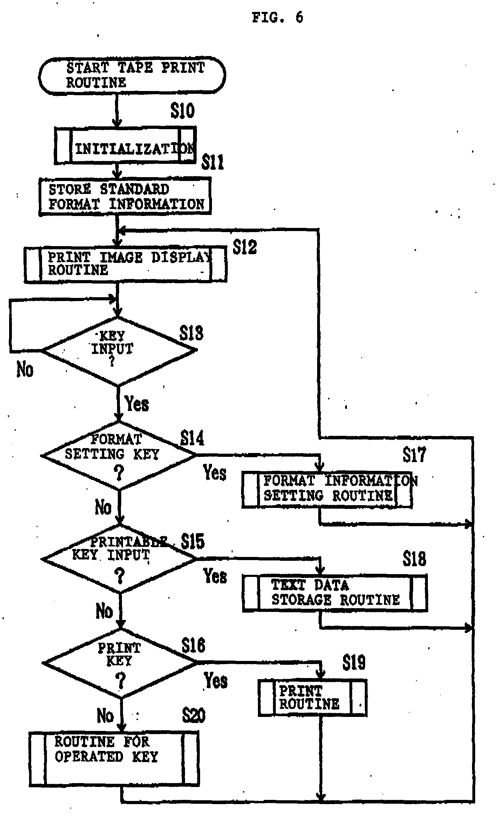

The tape print control routine executed by the control unit C of the tape printing apparatus 1 will be described below with reference to the flowcharts in Figs. 6 through 9. In the figures, Si (i = 10, 11, 12, etc.) represents individual steps.

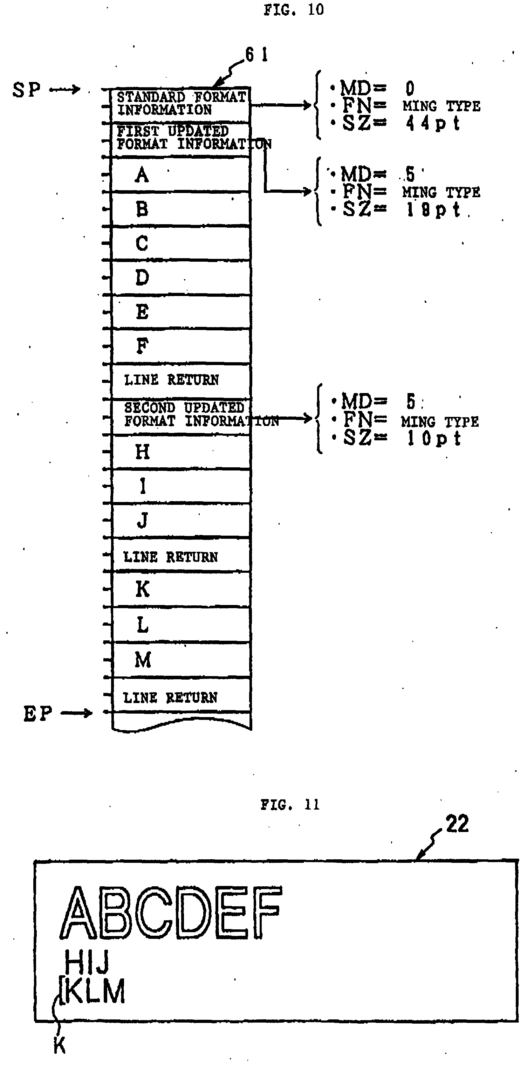

Operating the power key on the keyboard 3 starts the control routine. Starting the routine clears the memories 61 through 66 in the RAM 60 and initializes the print mechanism PM (S10). Then, the first two bytes of the text memory 61 are loaded with the standard format information. The LCD unit 22 displays a text input screen. This screen includes a cursor K having the same height as the display character size. The display character size corresponds to the print character size defined by the standard format information (S11). When the standard format is in effect, characters will be displayed on this screen with the same appearance as when printed out. In the example shown in Fig. 10, the standard format information stored in the first two bytes of the text memory 61 includes the value "0" for character enhancement data (which in this example means no enhancement is to be provided for characters), "Ming type" for the font number data FN, and "44 pt (points)" for the print character size SZ.

A print image display process is then carried out, whereby the characters and symbols held in the text memory 61 are displayed in print-like images (S12). This process will be discussed later in more detail.

When some format setting key is operated (i.e., S13 and S14 are YES), then a format information setting process is carried out in S17. Then, the control routine proceeds via S12 to S13. During the format information setting process, the LCD unit 22 displays a format setting screen in which all format settings including the character enhancement type, the print character size, and font name may be designated. With the format setting screen displayed, the cursor move keys are operated to set the cursor consecutively at positions on the screen for setting character enhancement type, print character size, font name, and the like. At each item to which the cursor is set, appropriate numeric keys are operated to enter the desired setting, after which the enter key is pressed. This causes the format information including the numerically set character enhancement number MD and print character size SZ to be stored in the text memory 61 as updated format information.

The character enhancements can be set to "0" when no enhancement is desired, to "1" to provide underlining to characters, to "2" for providing shadowing to characters (see Fig. 1A), to "3" for producing characters in bold print, to "4" for adding italics to characters, to "5" for producing outline characters, to "6" for producing shadow characters (see Fig. 1B), and the like. The print character sizes that may be set and their corresponding setting numbers are "1" for 6 pt, "2" for 10 pt, "3" for 13 pt, "4" for 19 pt, "5" for 26 pt, "6" for 38 pt, and "7" for 44 pt. For example, as shown in Fig. 10, when the character enhancement number MD is changed to "5" (i.e, for producing outline characters) and the print character size SZ is changed to 19 pt before the text data is inputted, the updated format data including setting information updated in this way is stored as two bytes in the text memory 61 successive to the standard format information.

Next, when a printable key, such as a key representing a character, is manipulated (i.e., S13 is YES, S14 is NO, and S15 is YES), text data storage processes are executed for storing code data of the manipulated printable key in the text memory 61 as text data (S18). Then the print image display control routine is executed (S12).

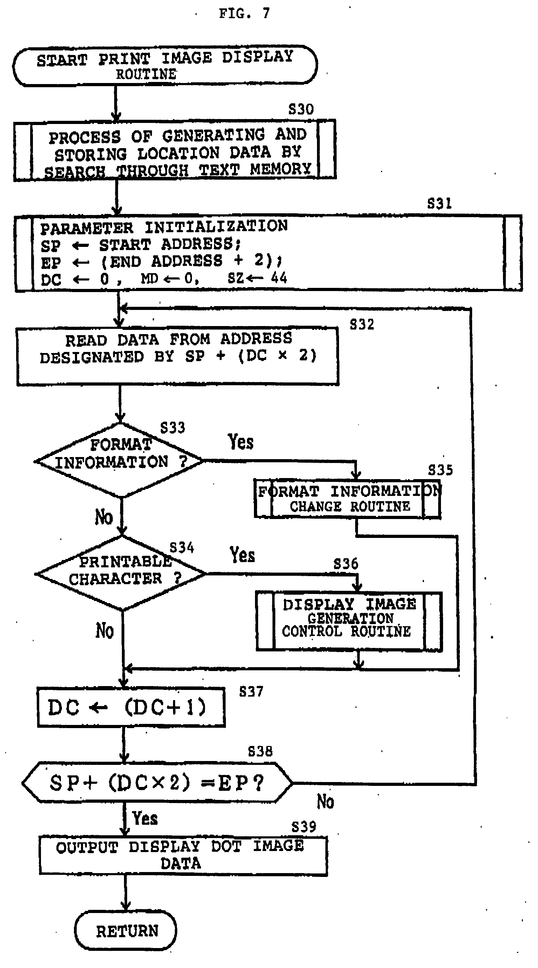

The print image display control routine (see Fig. 7) will now be described in detail. For this explanation, it will be assumed that the text memory 61 stores the standard format information, the first updated format information, the character string ABCDEF, a return code for changing rows on which text is produced, the second updated format information, and other data as shown in Fig. 10.

When this control routine is started, data in the text memory 61 is searched out successively from the start address. The locations in the display data buffer 65 where display dot pattern data for each of the characters to be displayed should be developed are determined based on the format information, character codes, and return codes. The location data is placed into the location data memory 64 (S30). The location data is determined illustratively as follows: the print locations of the characters are first obtained based on the format information, character codes, return codes, and print dot pattern data. The coordinates of the character locations are then multiplied by one third to determine the corresponding display locations. Next, the parameter data in the parameter memory 62 about the print process is initialized (S31). That is, in the parameter memory 62, the start address of the text memory 61 is set as the start address pointer value SP (see Fig. 10); the address next to the end address of the text memory 61 (end address + 2) is set as the end address pointer value EP (see Fig. 10); the initial value "0" is set for the data count value DC; the initial value "0" is set for the character enhancement number MD; and the size 44 pt is set for the print character size SZ.

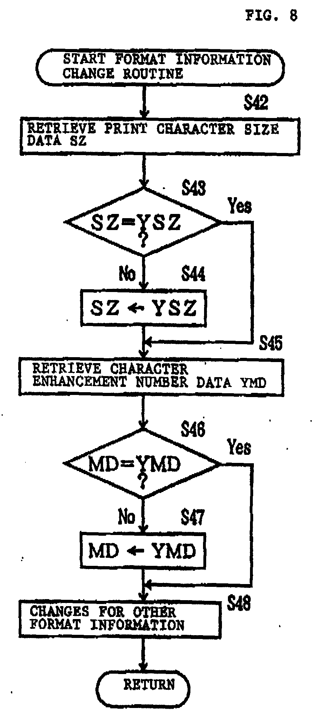

Because the format information and the character code are each composed of two bytes, data of the search address has added thereto a value that is two times the data count value DC and the result is stored in the start address (S32). When the data stored in the start address is format information (i.e., YES in S33), a format information change process control routine is carried out (S35) as shown in Fig. 8.

When this control routine is started, print character size data YSZ contained in the format information is retrieved (S42). When the retrieved print character size YSZ differs from the print character size SZ in the parameter memory 62 (i.e., S43 is NO), the print character size SZ in the parameter memory 62 is changed to the retrieved print character size YSZ (S44). When the print character size SZ in the parameter memory is the same as the retrieved print character size YSZ (i.e., S43 is YES), the program proceeds to S43.

Next, the character enhancement number data YMD stored in the format information is retrieved (S45). When the retrieved character enhancement number data YMD differs from the character enhancement number MD in the parameter memory 62 (i.e., S46 is NO), the character enhancement number MD in the parameter memory 62 is changed to the retrieved character enhancement number data YMD (S47) and the program proceeds to S48. Next, other format information is searched. In the same manner, retrieved data that differs is changed to the format value in the text memory 61 and newly stored in the parameter memory 62 (S48). This control routine is then terminated and the program returns to S37 of the printed image display control routine.

Then, in the print image display control routine, the data count value DC is then incremented by 1 (S37). If the search address, to which was added the doubled data count value DC, fails to match the address designated by the end address pointer value EP, with a display character assumed to exist in the text memory 61 (i.e., NO in S38), S32 and subsequent steps are again carried out.

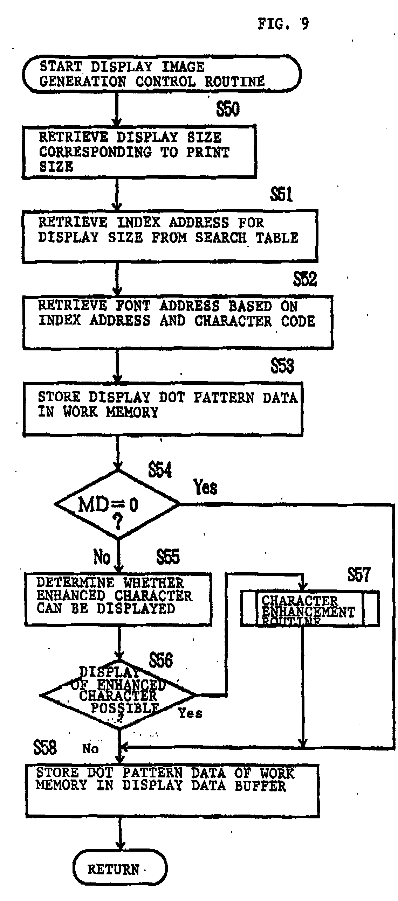

When the search address data is a printable character code (i.e., S33 is NO and S34 is YES), the display image generation control routine (refer to Fig. 9) is executed (S36).

When this program is started, based on the character size conversion table TB1, the display character size corresponding to the print character size SZ in the parameter memory is retrieved (S50). Based on this display character size and the display character search table, the index address, where the character and symbol dot patterns relating to that display character size are stored in the display CGROM 53, is retrieved (S51). Based on this index address, the character code, and the display character index table, the font memory address, that is, the start storage address in the display CGROM 53 of that character, is retrieved (S52). The display dot pattern data stored in that font memory address is read out of the display CGROM 53 and stored in the work memory 67 (S53).

Next, when the character enhancement number is not 0, which means that character enhancement processes are to be executed (i.e., S54 is NO), whether characters can be effectively displayed with the enhancement feature is determined based on the type of character enhancement, the display character size, and predetermined determination logic (S55). When it is determined that effective display of enhanced characters is possible (i.e., S56 is YES), character enhancement processes are performed for the type of enhancement indicated by the character enhancement number MD, the display enhancement dot parameter data processed according to the character enhancement processes is newly stored in the work memory 67 (S57), and the program proceeds to S58. When it is determined that display of the enhanced character would be ineffective, for example, when characters will be illegible when displayed with the enhancement feature or when the enhancement feature will not be noticeable when the characters are displayed (i.e., S56 is NO), in the same manner as when S54 is determined as YES, the program proceeds to S58 without producing enhanced dot pattern data for that character. The display dot pattern data stored in the work memory 67 is stored at the storage location of the display data buffer 65 indicated by the location data of that character stored in the location information memory 64 (S58). Then this control routine is terminated and the program returns to S37 of the print image display control routine.

Next, an explanation of the predetermined determination logic will be provided. The predetermined determination logic allows determination of which characters can be effectively displayed with which enhancement features at which print character sizes SZ. The predetermined determination logic can be provided in table form or attached to character enhancement data. In this preferred embodiment, shadow-added characters (characters provided with enhancement type number 2) are provided with logic that allows display of characters set with a print character size SZ of 13 pt or greater. Bold print characters (character enhancement type number 3) are provided with logic that allows display of characters set with a print character size SZ of 6 pt or greater. Outline characters (character enhancement type number 5) are provided with logic that allows display of characters set with a character size SZ of 13 pt or greater. Shadow characters (character enhancement type number 6) are provided with logic that allows display of characters set with a print character size SZ of 26 pt or greater.

Next, after S37 in the print image display control routine, when the address in the start address (i.e, the search address to which the doubled address value of the data count value DC was added) matches the address indicated by the end address pointer value EP (i.e., S38 is YES), the display dot image data developed and stored in the display data buffer 65 is outputted to the video RAM 24 and displayed on the display 22 (S39). Then this control routine is terminated and the program returns to S13 of the tape print control routine.

For example, when the string of text codes and format information are stored in the text memory 61 as shown in Fig. 10, the outline character enhancement type and the 19 pt print character size SZ are set to the character string ABCDEF. According to the determination logic described previously, under these circumstances the characters of this character string can be effectively displayed in outline form. Therefore, the character string ABCDEF is displayed on the display 22 as outline characters as shown in Fig. 11. The character string ABCDEF provided with the outline character enhancement and at a 19 pts character size can be accurately read on the display 22. Although, the two rows of character strings HIJ and KLM are also set with the outline character enhancement, they are set with a print character size SZ of only 10 pt. According to the determination logic described previously, under these circumstances these character strings can not be effectively displayed in the form of an outline. Therefore, the character strings HIJ and KLM are displayed as normal characters and not in outline form.

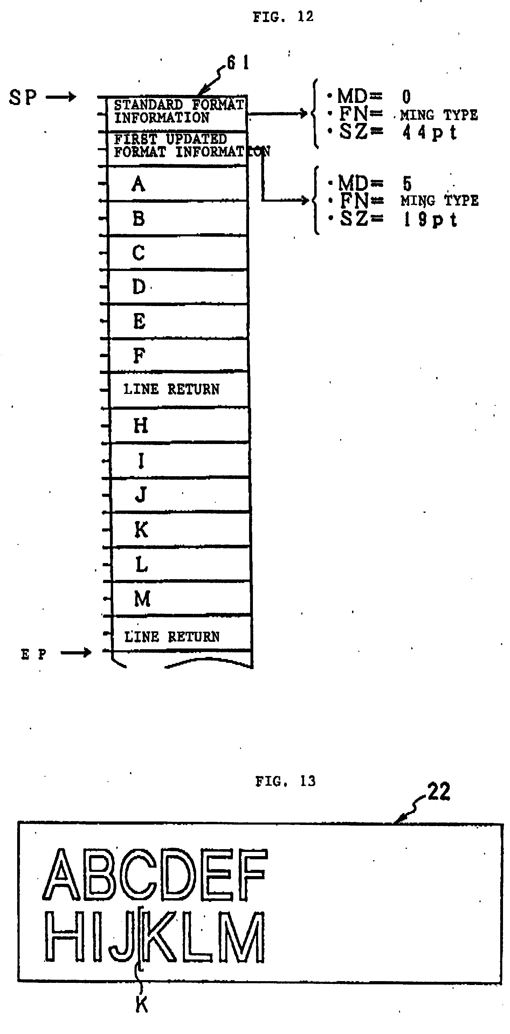

As an alternative example, when the train of format information, text codes, and the like stored in the text memory 61 appears as in Fig. 12, two rows of character strings ABCDEF and HIJKLM are set to be outline characters with a print character size SZ of 19 pt. According to the determination logic described previously, these character strings can be effectively displayed in outline form. Therefore, the two rows of character strings ABCDEF and HIJKLM are displayed on the display 22 as outline characters as shown in Fig. 22. The thus displayed character strings ABCDEF and HIJKLM can be accurately read.

Next, when the print key is manipulated during the tape print control routine (i.e., S13 is YES, S14 and S15 are NO, and S16 is YES), the printing process control routine is executed (S19) and the program returns to S12. The print control routine is a normal print control routine, so will be explained here only briefly. Format information, character codes, and the like are sequentially retrieved from the text memory 61. Based on the print character search table and the print character index table, the print dot pattern data is retrieved from the print CGROM 54 for that character code, developed, composed, and stored in the print data buffer 66. Print dot image data in the print data buffer 66 is outputted to the print mechanism PM and printing is performed on the print tape 19 accordingly.

When a key other than a format setting key, a printable key, or the print key is manipulated (i.e., S13 is YES and S14 through S16 are NO), processes appropriate for the manipulated key are executed (S20) and the program returns to S12.

As described above, when enhanced character display dot pattern data is to be produced for displaying a character to which a character enhancement feature is set, whether the enhanced character can be effectively displayed on the display is determined based on a predetermined determination logic, the display character size, and the type of character enhancement. A command to cancel production of enhanced character display dot pattern data is outputted in regards to those characters determined to be impossible to effectively display with the enhancement feature. Display dot pattern data is produced for the character without the character enhancement provided. On the other hand, for those characters determined to be possible to effectively display with the enhancement feature, no command is outputted to cancel production of enhanced character display dot pattern data so that enhanced character display dot pattern data is produced. Therefore, characters that will be illegible on the display 22 when provided with a character enhancement are displayed as normal characters on the display 22. Only characters that will appear legible when displayed in the form to be printed are selectively displayed with the appropriate character enhancement. Therefore, the image display function can be used to its fullest benefit.

The determination logic for determining whether effective display of enhanced characters is possible can be changed from the example given in the first preferred embodiment as appropriate for the size of the display screen of the display 22, the dot number making up the display dot pattern data, and the like. Additionally, the print character size can be determined from the tape width of the print tape 19 and the number of rows of inputted characters. Also, the present invention can be applied to various types of word processors which include a keyboard, a display, and a printing mechanism, and which are capable of character enhancement processes.

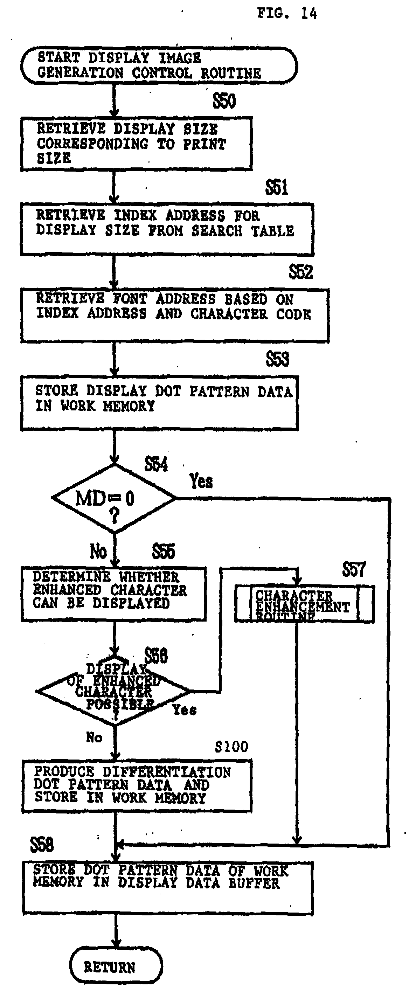

A tape printer according to a second preferred embodiment of the present invention is similar to the tape printer described in the first preferred embodiment except that as shown in Fig. 14 when it is determined during the display image generation control routine that effective display of the enhanced character is impossible (i.e., S56 is NO), before proceeding to S58, the routine proceeds to S100 where differentiation dot pattern data, for displaying the character in, for example, an inverse display, is produced for the character. The differentiation dot pattern data is then stored in the work memory 67 in place of the previously stored display dot pattern data, and the program proceeds to S58. Subsequent processes are carried out as described in the first preferred embodiment.

Differentiation dot pattern data when displayed allows an operator to easily recognize which characters are provided with an enhancement feature, but which can not be effectively displayed with the enhancement feature. Differentiation dot pattern data can be any type of dot pattern data which creates a display image that allows an operator to make this differentiation.

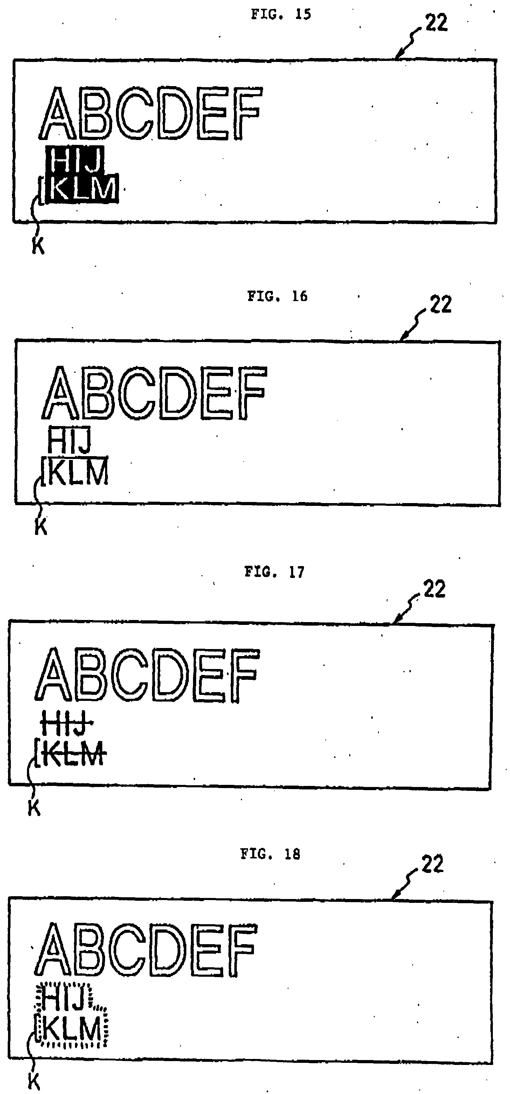

For example, characters which are provided with enhancement features, but which can not be effectively displayed in enhanced form, can be effectively displayed with white and dark areas inverted. In this case, when data is stored in the text memory as shown in Fig. 10, the character strings HIJ and KLM will be displayed as shown in Fig. 15. Inverse display is conspicuous because it is not normally used. Therefore, inverse display draws the attention of the operator and makes it easy for the operator to recognize that the inversely displayed characters will be printed out with an enhancement feature. Differentiation dot pattern data for producing inverse display can be produced by reversing values of bits that constitute the display dot pattern data stored in the work memory 67 (that is, changing 1 values to 0 and 0 values to 1).

Other examples of differentiation dot pattern data are data produced so as to display characters with an overhead line above the characters as shown in Fig, 16, with a strike out mark crossing out the characters as shown in Fig. 17, or with the characters in a flashing or blinking image as shown in Fig. 18.

## Claims

1. A word processor for producing text containing a plurality of characters, such as symbols and alphanumeric characters, into a form suitable for printing, the word processor comprising:
display dot pattern data memory means (53) for storing display dot pattern data that corresponds to each of the plurality of characters;
input means (3) for inputting a variety of commands and characters of the plurality of characters;
data memory means (61) for storing data that represents the inputted characters inputted through the input means (3);
character format setting means for setting a character size (SZ) with which the inputted characters represented by data in the data memory means (61) are to be printed and for setting a type (MD) of character enhancement with which the inputted characters represented by data in the data memory means (61) are to be printed;
print means (PM) for receiving and printing data in the memory means (61) with the character size (SZ) and the type (MD) of character enhancement, both set by the character format setting means;
display dot image production means for retrieving, from the display dot pattern data memory means (53), display dot pattern data that corresponds to the inputted characters represented by the data in the data memory means (61), and for producing enhanced display dot image data for the inputted characters with the type (MD) of character enhancement set by the character format setting means;
display means (22) for receiving and displaying enhanced display dot image data produced by the display dot image production means;
enhanced character effective display determination means for determining whether each of the inputted characters with character enhancement can be effectively displayed by the display means (22) based on the type (MD) of character enhancement set for each of the inputted characters by the character format setting means, and based on a display character size (SZ) for each of the inputted character set by the character format means; and
enhanced display cancellation means for receiving output from the enhanced character effective display determination means and canceling production in the display dot image production means of enhanced display dot image data for the inputted characters determined by the enhanced character effective display determination means to be impossible to effectively display in enhanced form.

2. A word processor as claimed in claim 1 further comprising a differentiation dot pattern data production means for producing differentiation dot pattern data for the inputted characters for which production of enhanced display dot image data is canceled by the enhanced display cancellation means, the differentiation dot pattern data, when displayed by the display means (22), allowing an operator to recognize which characters are provided with character enhancement.

3. A word processor as claimed in claim 2 wherein the differentiation dot pattern data production means produces differentiation dot pattern data which causes the inputted characters for which production of enhanced display dot image data is canceled by the enhanced display cancellation means to be displayed in an inverse display.

4. A word processor as claimed in claim 3 wherein the inverse display is produced by reversing values of bits that constitute display dot pattern data corresponding to the inputted characters for which production of enhanced display dot image data is canceled by the enhanced display cancellation means.

5. A word processor as claimed in claim 2 wherein the differentiation dot pattern data production means produces differentiation dot pattern data which causes the inputted characters for which production of enhanced display dot image data is canceled by the enhanced display cancellation means to be displayed with an overhead line.

6. A word processor as claimed in claim 2 wherein the differentiation dot pattern data production means produces differentiation dot pattern data which causes the inputted characters for which production of enhanced display dot image data is canceled by the enhanced display cancellation means to be displayed with an overlying strike out mark.

7. A word processor as claimed in claim 2 wherein the differentiation dot pattern data production means produces differentiation dot pattern data which causes the inputted characters for which production of enhanced display dot image data is canceled by the enhanced display cancellation means to be displayed in a blinking image.

8. A word processor as claimed in one of claims 1 to 7, wherein display dot image production means retrieves, from the display dot pattern data memory means (53), display dot pattern data that corresponds to the inputted characters determined by the enhanced character effective display determination means to be impossible to effectively display in enhanced form, so that characters are displayed without character enhancement.

## Patentansprüche

1. Textverarbeitungssystem zum Erzeugen von Text mit einer Mehrzahl von Zeichen wie Symbole und alphanumerische Zeichen in eine Form geeignet zum Drucken mit:
einem Anzeigenpunktmusterdatenspeichermittel (53) zum Speichern von Anzeigenpunktmusterdaten, die jedem der Mehrzahl von Zeichen entsprechen;
einem Eingabemittel (3) zum Eingeben einer Verschiedenheit von Befehlen und Zeichen der Mehrzahl von Zeichen;
einem Datenspeichermittel (61) zum Speichern von Daten, die die durch das Eingabemittel (3) eingegebenen Zeichen darstellen;
einem Zeichenformateinstellmittel zum Einstellen einer Zeichengröße (SZ), mit der die durch die Daten in dem Datenspeichermittel (61) dargestellten eingegebenen Zeichen zu drucken sind, und zum Einstellen einer Art (MD) einer Zeichenverstärkung, mit der die durch die Daten in dem Datenspeicher (61) dargestellten eingegebenen Zeichen zu drucken sind;
einem Druckmittel (PM) zum Aufnehmen und Drucken von Daten in dem Speichermittel (61) mit der Zeichengröße (SZ) und der Art (MD) der Zeichenverstärkung, die beide durch das Zeichenformateinstellmittel eingestellt sind;
einem Anzeigenpunktbilderzeugungsmittel zum Gewinnen von Anzeigenpunktmusterdaten aus dem Anzeigenpunktmusterdatenspeichermittel (53), die den durch die Daten in dem Datenspeichermittel (61) dargestellten eingegebenen Zeichen entsprechen, und zum Erzeugen von verstärkten Anzeigenpunktbilddaten für die eingegebenen Zeichen mit der durch das Zeichenformateinstellmittel eingestellten Art (MD) der Zeichenverstärkung;
einem Anzeigenmittel (22) zum Aufnehmen und Anzeigen von von dem Anzeigenpunktbilderzeugungsmittel erzeugten verstärkten Anzeigenpunktbilddaten;
einem Bestimmungsmittel der wirksamen Anzeige des verstärkten Zeichens zum Bestimmen, ob jedes der eingegebenen Zeichen mit der Zeichenverstärkung wirksam durch das Anzeigenmittel (22) angezeigt werden kann auf der Grundlage der für jedes der eingegebenen Zeichen durch das Zeichenformateinstellmittel eingestellten Art (MD) der Zeichenverstärkung und auf der Grundlage einer durch die Zeichenformateinstellmittel für jedes der eingegebenen Zeichen eingestellten Anzeigenzeigengröße (SZ); und
einem Löschmittel der verstärkten Anzeige zum Aufnehmen einer Ausgabe von dem Bestimmungsmittel der wirksamen Anzeige des verstärkten Zeichens und Löschen der Erzeugung von verstärkten Punktmusterbilddaten für die eingegebenen Zeichen in dem Anzeigenpunktbilderzeugungsmittel, für die durch das Bestimmungsmittel der wirksamen Anzeige des verstärkten Zeichens bestimmt ist, daß es unmöglich ist, sie wirksam in verstärkter Form anzuzeigen.

2. Textverarbeitungssystem nach Anspruch 2, weiter mit einem Erzeugermittel für differierende Punktmusterdaten zum Erzeugen differierender Punktmusterdaten für die eingegebenen Zeichen, für die die Erzeugung verstärkter Anzeigenpunktbilddaten durch das Löschmittel der verstärkten Anzeige gelöscht ist, wobei die differierenden Punktmusterdaten einem Bediener ermöglichen, wenn sie von dem Anzeigemittel (22) angezeigt sind, zu erkennen welche Zeichen mit Zeichenverstärkung versehen sind.

3. Textverarbeitungssystem nach Anspruch 2, bei dem das Erzeugermittel für differierende Punktmusterdaten differierende Punktmusterdaten erzeugt, die bewirken, daß die eingegebenen Zeichen, für die die Erzeugung der verstärkten Anzeigepunktmusterdaten durch das Löschmittel der verstärkten Anzeige gelöscht ist, in einer umgekehrten Anzeige angezeigt werden.

4. Textverarbeitungssystem nach Anspruch 3, bei dem die umgekehrte Anzeige erzeugt wird, in dem umgekehrte Werte der Bit erzeugt werden, die die Anzeigenpunktmusterdaten darstellen entsprechend den eingegebenen Zeichen, für die die Erzeugung der verstärkten Anzeigenpunktmusterdaten durch das Löschmittel der verstärkten Anzeige gelöscht ist.

5. Textverarbeitungssystem nach Anspruch 2, bei dem das Erzeugermittel für das differierende Punktmusterdaten differierende Punktmusterdaten erzeugt, die bewirken, daß die eingegebenen Zeichen, für die die Erzeugung der verstärkten Anzeigenpunktmusterdaten durch das Löschmittel der verstärkten Anzeige gelöscht ist, mit einer Überkopflinie angezeigt werden.

6. Textverarbeitungssystem nach Anspruch 2, bei dem das Erzeugermittel differierender Punktmusterdaten differierende Punktmusterdaten erzeugt, die bewirken, daß die eingegebenen Zeichen, für die die Erzeugung der verstärkten Anzeigenpunktbilddaten durch das Löschmittel der verstärkten Anzeige gelöscht ist, mit einer darüberliegenden Ausstreichungsmarkierung angezeigt werden.

7. Textverarbeitungssystem nach Anspruch 2, bei dem das Erzeugermittel differierender Punktmusterdaten differierende Punktmusterdaten erzeugt, die bewirken, daß die eingegebenen Zeichen, für die die Erzeugung verstärkter Anzeigenpunktmusterdaten durch das Löschmittel der verstärkten Anzeige gelöscht ist, in einem blinkenden Bild angezeigt werden.

8. Textverarbeitungssystem nach einem der Ansprüche 1 bis 7, bei dem das Anzeigenpunktbilderzeugungungsmittel aus dem Anzeigenpunktmusterdatenspeichermittel (53) Anzeigenpunktmusterdaten gewinnt, die den eingegebenen Zeichen entsprechen, von denen durch das Bestimmungsmittel der wirksamen Anzeige des verstärkten Zeichens bestimmt ist, daß es unmöglich ist, sie wirk sam in verstärkter Form anzuzeigen, so daß Zeichen ohne Zeichenverstärkung angezeigt werden.

## Revendications

1. Machine de traitement de texte destinée à produire un texte contenant une pluralité de caractères tels que des symboles et des caractères alphanumériques dans une forme appropriée pour l'impression, la machine de traitement de texte comprenant :
des moyens (53) de mémoire de données de dessins de points d'affichage destinés à stocker une donnée de dessin de points d'affichage qui correspond à chacun de la pluralité de caractères ;
des moyens d'entrée (3) destinés à entrer une diversité d'ordres et de caractères de la pluralité de caractères ;
des moyens (61) de mémoire de données destinés à stocker des données qui représentent les caractères entrés qui ont été entrés à travers les moyens d'entrée (3) ;
des moyens de sélection du format des caractères, destinés à sélectionner une taille de caractères (SZ) avec laquelle les caractères entrés représentés par une donnée dans les moyens (61) de mémoire de données doivent être imprimés et pour sélectionner un type (MD) d'enrichissement de caractères avec lequel les caractères entrés représentés par une donnée dans les moyens (61) de mémoire de données doivent être imprimés ;
des moyens d'impression (PM) destinés à recevoir et à imprimer des données contenues dans les moyens de mémoire (61), avec la taille des caractères (SZ) et le type (MD) de l'enrichissement des caractères, qui sont tous deux sélectionnés par les moyens de sélection du format des caractères ;
des moyens de production d'images de points d'affichage destinés à récupérer dans les moyens (53) de mémoire de données de dessins de points d'affichage une donnée de dessin de points d'affichage qui correspond aux caractères entrés représentés par la donnée contenue dans les moyens (61) de mémoire de données, et à produire des données d'images de points d'affichage enrichies pour les caractères entrés avec le type (MD) d'enrichissement de caractères sélectionné par les moyens de sélection du format des caractères ;
des moyens d'affichage (22) destinés à recevoir et afficher la donnée d'image de points d'affichage enrichie produite par les moyens de production d'images de points d'affichage ;
des moyens de détermination d'affichage effectif des caractères enrichis, pour vérifier si chacun des caractères entrés comportant un enrichissement de caractère peut être effectivement affiché par les moyens d'affichage (22), en se basant sur le type (MD) d'enrichissement de caractère sélectionné pour chacun des caractères entrés par les moyens de sélection du format des caractères, et en se basant sur une taille de caractère d'affichage (SZ) pour chacun des caractères entrés, qui est sélectionnée par les moyens de format de caractères ; et
des moyens d'annulation d'affichage enrichi destinés à recevoir la sortie des moyens de détermination de l'affichage effectif des caractères enrichis et à annuler la production, dans les moyens de production d'images de points d'affichage, de données d'images de points d'affichage enrichies pour les caractères entrés, considérés par les moyens de détermination de l'affichage effectif des caractères enrichis comme impossibles à afficher effectivement dans la forme enrichie.

2. Machine de traitement de texte selon la revendication 1, comprenant en outre des moyens de production de données de dessins de points à différenciation, destinés à produire des données de dessins de points à différenciation pour les caractères entrés pour lesquels la production de données d'images de points d'affichage enrichies est annulée par les moyens d'annulation de l'affichage enrichi, les données de dessins de points à différenciation, lorsqu'elles sont affichées par les moyens d'affichage (22) permettant à un opérateur de reconnaître quels sont les caractères qui sont munis d'un enrichissement de caractères.

3. Machine de traitement de texte selon la revendication 2, dans laquelle les moyens de production de données de dessin des points à différenciation produisent des données de dessins de points à différenciation qui ont pour effet que les caractères entrés pour lesquels la production de données d'images de points d'affichage enrichies est annulée par les moyens d'annulation de l'affichage enrichi sont affichés en affichage inversé.

4. Machine de traitement de texte selon la revendication 3, dans laquelle l'affichage inversé est obtenu par des valeurs d'inversion des bits qui constituent les données de dessin de points d'affichage correspondant aux caractères entrés pour lesquels la production de données d'images de points d'affichage enrichies est annulée par les moyens d'annulation de l'affichage enrichi.

5. Machine de traitement de texte selon la revendication 2, dans laquelle les moyens de production de données de dessins de points à différenciation produisent des données de dessins de points à différenciation qui ont pour effet que les caractères entrés, pour lesquels la production de données d'images de points d'affichage enrichies est annulée par les moyens d'annulation de l'affichage enrichi, sont affichés avec une ligne de surlignage.

6. Machine de traitement de texte selon la revendication 2, dans laquelle les moyens de production de données de dessins de points à différenciation produisent des données de dessins de points à différenciation qui ont pour effet que les caractères entrés, pour lesquels la production de données d'images de points d'affichage enrichies est annulée par les moyens d'annulation de l'affichage enrichi, sont affichés avec une marque de biffure.

7. Machine de traitement de texte selon la revendication 2, dans laquelle les moyens de production de données de dessins de points à différenciation produisent des données de dessins de points à différenciation qui ont pour effet que les caractères entrés, pour lesquels la production de données d'images de points d'affichage enrichies est annulée par les moyens d'annulation de l'affichage enrichi, sont affichés sous la forme d'une image clignotante.

8. Machine de traitement de texte selon une des revendications 1 à 7, dans laquelle les moyens de production d'images de points d'affichage récupèrent dans les moyens de mémoire de données de dessins de points d'affichage (53), les données de dessins de points d'affichage qui correspondent aux caractères entrés, considérés par les moyens de détermination d'affichage effectif de caractères enrichis comme étant impossibles à afficher effectivement sous la forme enrichie, de sorte que les caractères sont affichés sans enrichissement de caractère.
